# EUROPEAN PATENT APPLICATION

(11) **EP 1 394 692 A1**
(43) Date of publication of application: **03.03.2004**
(21) Application number: 02360230.3
(22) Date of filing: 05.08.2002
(51) Int. Cl.: G06F 17/30

(54) **Method, terminal, browser application, and mark-up language for multimodal interaction between a user and a terminal**

(71) Applicant: ALCATEL, 75008 Paris (FR)
(72) Inventor: Sienel, Jürgen, 71229 Leonberg (DE); Kopp, Dieter, 75428 Illingen (DE)
(74) Representative: Rausch, Gabriele, Dr.

(57) **Abstract**

A multimodal interaction between a user and a terminal (3) takes place by using at least an input unit (61,62,63,64) belonging to an input modality and an output unit (66,67) belonging to an output modality, a mark-up language, extend with multimodal meta tags, and a broser application (31), which is capable of interpreting the mark-up language. The input/output unit and the browser application are provided at a terminal. According to a method, terminal and browser application of invention, at least one input and/or output procession application (41,42,43,44) is provided for processing data related to the browser application, wherein multimodal meta tags from the mark-up language are interpreted for controlling the multimodal interactions and processing data of the multimodal interaction with respect to the multimodal meta tags.

## Description

### Field of the Invention

The invention relates in general to an interaction between a user and a terminal, in particular in connection with a service provided over a communication network. More specifically, the invention relates to a method, a terminal, a browser application, and a mark-up language for multimodal communicating between the user and the terminal.

### Background of the Invention

Today, the interaction between user and a terminal of a communication system usually takes place by a graphical user interface (GUI) using standard in- and output devices like keyboard, mouse, monitor etc. With reference to the internet a graphical user interface based on Hypertext Mark-up Language (HTML), which is also called a browser, has proven as one of key success factors of the internet.

However, the graphical user interface with this kind of inputs and outputs requires an adaptation of the human communication, namely speaking, listening and gesticulation to the kind of communication of the end user device / terminal, namely typing, clicking and reading. Furthermore, as soon as mobile devices like Personal Digital Assistants (PDAs) or mobile phones are used as clients, the interaction becomes more complicated. The smaller the end-user devices become, the more inconvenient becomes the traditional use of a text/graphic based interface by typing and clicking. Multi-modal interaction can help to put more focus on the strength of each input output channel and this way make interaction more adapted to the users needs. A user interface which enables speech input and output, handwriting recognition and gestures allows better adaptation to the currently used device and the situation.

For example on tiny display, speech can support the message on the display by saying what exactly the user is expected to do. In the same way voice only interface can benefit from the ability of a graphical interface to show information parallel instead of sequential. Similar, speech input can be used to fill several items of a dialog with a single utterance, which is impossible to obtain with key input.

A problem is the synchronization of the events between the graphical elements and the speech elements, which basically differ. There have been published different approaches to cover this problem.

The Microsoft MIPAD [X. Huang et al., "MiPad: A Next Generation PDA Prototype", ICSLP, Beijing, China 2000] covers the synchronization by directly selecting the element to fill. The advantage of such tap'n talk approaches is the fact that the user actively determines the modality and the point when he wants to start a new input. This covers problems coming from an open microphone generating insertion errors e.g. in noisy situations or during off-talk of the user [G. Caccia et al., "Multimodal Browsing", ASRU 2001, Madonna di Campiglio]. On the other hand, using tap'n talk doesn't allow the user to completely interact to the system by voice.

Other approaches want to co-ordinate graphical and voice input by synchronizing events from two different browsers, by using applets or server based scripts, which is rather difficult if the corresponding pages have to be generated automatically.

### Summary of the Invention

It is an object of the present invention to provide a method, a terminal, a browser application, and a mark-up language which are more user friendly and enable a multimodal interaction between a user and a terminal over a browser application.

These objects are achieved by a method according claim 1, a terminal according claim 7, a browser application according claim 9, and a mark-up language according claim 10.

A basic idea of the invention is to integrates information for multimodal interaction between a user and a terminal, which takes place over an input and output unit of the terminal and a browser application, which is used for representing a mark-up language document, in the mark-up language directly, and adding further interpretation of the extended language into the browser application. The integration of information and data respectively, which are necessary for multimodal interaction is realised with new meta tags, which are denoted as multimodal meta tags in the specification and the claims of the present application. This approach enables the compatibility with the typical interpretation of a mark-up language, for example HTML, i.e. the compatibility with a standard browser architecture.

A multimodal interaction between a user and a terminal takes place over an input unit and/or an output unit and by using a browser application and a mark-up language, wherein the mark-up language comprises an extension of multimodal meta tags for multimodal interactions and the browser application is capable of interpreting the mark-up language.

According to a method of the invention, the multimodal meta tags from the mark-up language are interpreted for controlling the multimodal interactions and data of the multimodal interaction are processed with respect to the multimodal meta tags by using at least one input and/or output processing application.

A terminal according to the invention comprises an input unit, an output unit and a browser application, wherein the multimodal meta tags from the mark-up language are interpreted at the terminal for controlling the multimodal interactions and said terminal comprises at least one input and/or output processing application for processing data of the multimodal interaction with respect to the multimodal meta tags.

A browser application according to the invention, which is used for multimodal interaction between an user and a terminal, interprets the mark-up language with the multimodal meta tags, wherein the browser application is controlled corresponding to the multimodal meta tags and/or a communication between the browser application and an input and/or output processing application of the terminal is controlled corresponding to said multimodal meta tags.

A mark-up language according to the invention, also called as a multimodal extended mark-up language, comprises meta tags specifying properties and values of said properties for example of a mark-up language document and multimodal meta tags for controlling the multimodal interactions and processing data of the multimodal interaction with respect to the multimodal meta tags by using at least one input and/or output processing application

Preferable, the multimodal meta tags are used for controlling the browser application and/or a communication between the browser application and the input and/or output processing applications corresponding to the multimodal meta tags.

A multimodal interaction is an interaction using at least two different modalities. An interaction means to receive and/or to express information, i.e. the input of data (by the user) and/or the output of data (provided for a user). A modality of interaction means first of all an interaction stimulating a sense of humane sensory perception or a sense organ and/or expressing information. The human sensory perception is usually divided in 5 senses, namely sight, hearing, touch, smell and taste. Information are expressed in writing, speech and gestures, for example by handwriting or typing, by generating or selecting symbols, by speaking, by gestures like pointing with a hand or eyes.

In context with a man machine communication and interface, respectively, the expression "to receive or to express information" means in particular an input and/or output of the machine with respect to the user.

Furthermore, "modality" is to be understood in the meaning of "in which manner" or "in which way" an input and/or output is executed, e.g. using input and/or output facilities which offer (inherent) different types of input and/or output is considered as different modalities. Thus, throughout this specification including in the claims, a controlling or an input by keyboard (to type), mouse (to select and to click), or handwriting using appropriate input devices (to write) is considered as different modalities, even hands are used every time. Also the outputting of speech and tones are considered as different modalities although loudspeakers / ears are involved in both cases. Consequently, an input and an output belongs in general to different modalities, because of its in general different input and output devices.

Meta tags are for example known from HTML. HTML lets authors specify meta data information about a document rather than document content in variety of ways. With reference to HTML a meta element or a meta tag are used to include name/value pairs describing properties of the document, such as author, expiry, date, a list of key words etc. In general meta tags have two possible attributes:
<META HTTP-EQUIV="name" CONTENT="content">
<META NAME="name" CONTENT="content">

The NAME attribute specifies the property name while the CONTENT attribute specifies the property value, e.g.
<META NAME="Author" CONTENT ="John Smith">

The HTTP-EQUIV attribute can be used in place of the NAME attribute and has a special significance when documents are retrieved via the Hypertext Transfer Protocol (HTTP). META tags with an HTTP-EQUIV attribute are equivalent to HTTP headers. Typically, they control the action of browsers, and may be used to refine the information provided by the actual headers. Tags using this form should have an equivalent effect when specified as an HTTP header, and in some servers may be translated to actual HTTP headers automatically or by a pre-processing tool.

A multimodal meta tag according to the invention is a meta element for multimodal interactions, which (directly) integrates information/data of a multimodal interaction in the corresponded mark-up language. By interpreting the multimodal meta tags it becomes possible to control a browser application, to detect and/or recognise a multimodal interaction from an input unit having an input modality, to represent and/or to generate an multimodal interaction on an output unit having an output modality, and/or to exchange multimodal interactions with respect to the multimodal meta tags with respect to the multimodal meta tag.
Preferable, a multimodal meta tag controls a multimodal interaction between the browser and a mark-up language document and/or a communication between the browser and an application for processing data related to the multimodal interaction.

According to a preferred method of the invention, the browser application is controlled corresponding to said multimodal meta tags and/or a communication between the browser application and the input and/or output processing applications is controlled corresponding to said multimodal meta tags.

In an advantageous embodiment of the invention the at least one input and/or output processing application for processing data of the multimodal interaction with respect to the multimodal meta tags is one of the following applications:
- handwriting recognition application,
- speech recognition application,
- eye movement recognition application, and /or
- speech generation application.
- pointing recognition

Thus, additional modalities for interacting with the terminal, in particular via the browser, by speech, handwriting, eye movement and/or pointing are provided, wherein a data input and/or output occurs over appropriate devices like pen, microphone, loudspeaker, camera, data glove, touch screen etc.

Different methods, devices and applications for eye movement recognition are known by persons skilled in the art. According to one method for eye movement recognition a pale coloured cross, preferable invisible for the user, is represented at a monitor, wherein the reflection of the cross (including the monitor content) in the eyes is detected with a camera. The eye movement and the visual focus respectively is determined by detecting and computing the reflection of the cross under consideration of curvature of the eyes and tracking the cross at the monitor correspondingly.

A pointing recognition could by achieved in a simple manner by using a touch screen. A more sophisticated manner for pointing recognition is the use of a data glove, wherein the movement or even gesture of a hand are detected and evaluated. By another method the pointing is detected by using an array of cameras. This is in particular advantageous, if the spatial operation area of the terminal is known and limited, like the interior of a car, where the position of a user is predetermined with respect to the terminal, which is part of a dashboard of the car. Of course, the detecting of coordinates, like the position of a hand with respect to a monitor of the terminal, could be connected with a pattern recognition.

According to an embodiment of the invention, the input and/or output processing applications are provided at the terminal.

According to another embodiment of the invention, the input and/or output processing applications are realised as an application having a distributed architecture. This is advantageous, if the input and/or output processing application needs a lot a computing power and/or the terminal is a mobile end device with limited size and computing resources. For example, an input and/or output processing application is distributed among the terminal and a server, wherein at least a front-end part of the input and/or output processing application is provided at the terminal.

In further development of the invention, rules are provided, wherein the rules determine the handling of a plurality of multimodal interactions (input and/or outputs) being related to each other. The rules are time, user preference and/or interaction dependent.

Preferable, the input and/or output data of the input and/or output unit are provided together with time information of its triggering. In other word:
means are provided for determining and evaluating time information of a multimodal interaction with respect to an input and/or an output.

Thereby, time periods are determined for different multimodal interactions, wherein multimodal interactions (an input and/or an output) within a time period are considered as belong to each other. The rules may comprise so called co-operative rules and/or hierarchical rules. Co-operative rules determine how multimodal interactions belonging to each other are linked or processed with each other. Hierarchical rules determine how conflicting results of multimodal interactions belonging to each other are solved.

In a preferred embodiment of the invention the mark-up languages is based on the Hypertext Markup Language (HTML), which is extended by introducing said additional multimodal meta tags.

In further development of the invention a transfer protocol is provided for interacting with the extended mark-up language of the invention. The transfer protocol comprises an extended set of commands which are adapted and associated to the multimodal meta tags of the mark-up language. Preferable, the transfer protocol is based on the Hypertext Transfer Protocol (HTTP).

Finally, also mark-up language documents are provided using the extended mark-up language of the invention. Thus, such mark-up language documents are suitable for a multimodal interaction using a method, a terminal, and a browser according to the invention.

It is to be understood that the aforementioned features and the features explained below can be used not only in the respective combinations described but also in other combinations or alone without departing from the scope of the present invention.

Various other benefits, embodiments and modifications of the invention will be understood from a consideration of the following detailed description taken in conjunction with the accompanying drawing.

### Brief Description of the Drawings

Preferred embodiments of the present invention will now be described with reference to the accompanying drawings in which
- Figure 1: shows a first embodiment of an architecture of a communication system for multi-modal interaction with a user;
- figure 2: shows a screenshot of a multi-modal browser according to the invention;
- figure 3: shows a flowchart of processing inputs event which are related to each other
- figure 4: shows a second embodiment of an architecture of a communication system for multi-modal interaction with a user
- figure 5: shows in more detail the distributed architecture of a feature for multi-modal interaction by example of a distributed speech recognition and

### Detailed Description of the Invention

A basic idea of the invention is to introduce special multimodal meta tags to a mark-up language for controlling a multimodal interaction between a user and a terminal having a browser. In more detail, the multimodal meta tags enable a connection/interaction between multimodal interacting units like speech recognition, handwriting recognition, text to speech generation etc., and in particular also a controlling thereof. In that way a common mark-up language is extended by introducing these multimodal meta tags while an accompanying browser application is still compatible with the common interpretation of the mark-up language and provided with an extended functionality. Although in the following description the Hypertext Markup Language is used as an example for a mark-up language which is according to the invention extended by multimodal meta tags, the invention is not restricted to the Hypertext Markup Language.

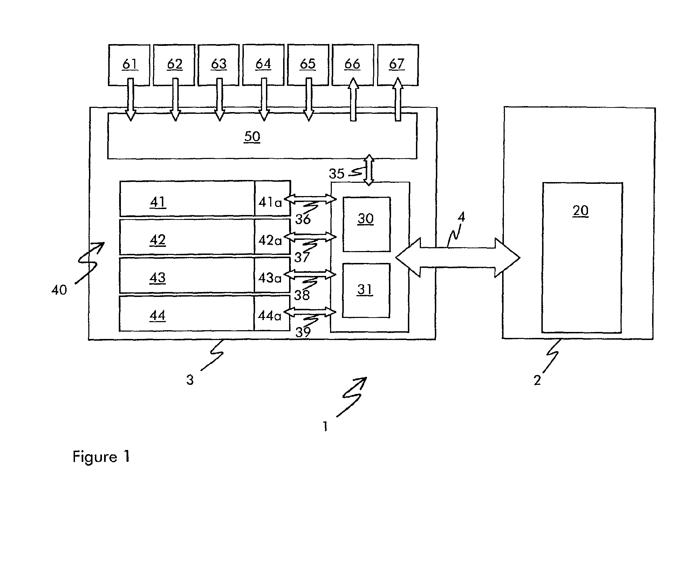

Fig. 1 shows a first embodiment of an architecture of a communication system for multi-modal interaction with a user. The communication system 1 comprises a client terminal 3 which is connected with a server 2 of a communication network over a communication link 4.

The communication network is in particular the Internet or an Intranet. The Internet is the world's largest computer network, consisting of many large computer networks joined together. It is basically a packet switch network based on a family of protocols like Transfer Control Protocol/Internet Protocol (TCP/IP) providing communication across interconnected networks. One services of the Internet is the World Wide Web (WWW), an information search system based on Hypertext. It is a kind of collection of data being Hypertext documents. Hypertext documents are in particular programmed in Hypertext Mark-up Language (HTML) and transmitted by Hypertext Transfer Protocol (HTTP) over the Internet. An Intranet is an private network that uses Internet software and Internet standards.

The server 2 comprises a web server 20, a software for storing, providing, processing in particular HTML documents and files - audio, video, graphic and text - as well as transmitting and receiving HTML documents over HTTP. A common web server usually handles at least Common Gateway Interface (CGI) programs and HTML, which are used for generating web pages dynamically, making connections and responding to user requests.

The communication link 4 is either wired or wireless, for example a connection over a subscriber line, Integrated Services Digital Network (ISDN), Digital Subscriber Line (DSL), Digital European Cordless Telecommunication, Groupe Speciale Mobile (GSM);lnternet Protocol (lP), Universal Mobile Telecommunication System (UMTS).

The terminal 3 comprises at least hardware for performing software, e.g. a microprocessor, a memory and in-/ouput means, and a operating system software. Referring to Figure 1 a schematic (software) architecture of the terminal 3 is shown. The terminal 3 comprises a input/output interface 50 for input/output devices 60 and apart from an operating system software 30 at least a web browser 31 as an application software. A microphone 61, a pen 62, a keyboard 63, a mouse 64, a camera 65, a display 66, and a loudspeaker are exemplary shown as input/output devices 60. The input and/or output devices 60 could be separate devices or integrally formed with the terminal 3. Preferable, the terminal 3 is an end user device like a computer, a notebook , a mobile phone, a Personal Digital Assistant (PDA). The terminal 3 further comprises modules for add-on modalities as handwriting recognition 41, speech recognition 42, eye movement /pointing recognition 43 and speech generation 44, which preferably comprises application interfaces 41a - 44a. The modules are realised in form of software and/or hardware. It should be noted that several or all of the modules for the individual add-on modalities could also be realised in one combined module for add-on modalities.

A Web Browser is in general a www client software, usually with graphical user interface. It could be considered as a primary user interface which accesses Web servers located locally, remotely or on the Internet and allows the user to navigate in the WWW. The web browser could also be formed as part of the operating system software.

The Terminal 3 has a web browser 31 according to the invention which is capable to interpret additional multimodal meta tags extending the used mark-up language, e.g. HTML. For controlling the add-on modalities like speech recognition 42, Text to Speech generation (TTS) 44, handwriting recognition 41, eye moving recognition and pointing recognition 43 the multimodal meta tags of the HTML document are analysed, which will trigger the application interfaces 41a - 44a of the different modality modules 41 - 44 as shown in figure 1. In other words: the interaction between the user and the browser 31 via an input and/or output unit 61 to 67 for multimodal interaction is at least partly controlled by the multimodal meta tags which will be later described in this specification in more detail.

Standard in-/output devices like keyboard 63, mouse 64, display 66 are indirect connected with the web browser 31 via the input/output interface 50. The input/output interface 50 is connected with the web browser 31 over the connection 35. A controlling of standard input/output devices via the connection 35 is performed by known HTML command for input/output devices. For input/output devices of add-on modalities like pen 62 or camera 65 the controlling via the connection 35 is performed by the additional multimodal meta tags according to the invention. The additional multimodal meta tags are also used for controlling the input/output processing modules 40 - 44 via connections 36 - 39. Of course, he operating system software 30 is involved in the controlling as indicated in figure 1.

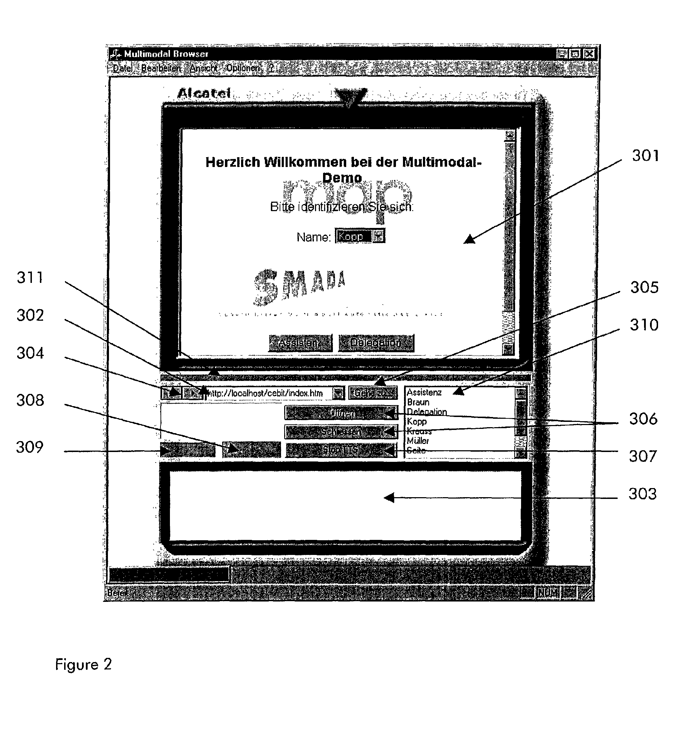

Figure 2 shows a screenshot of a multi-modal browser 31 according to the invention. The browser 31 is in particular adapted for the development purposes. That means, the browser 31 has more indicators or display areas, in particular for representing information useful during development, than a multimodal browser according to the invention, which is designed for a customer. A multimodal browser for customer is similar to a standard browser and additionally comprises an area for handwriting inputs, symbols/indicator showing the status (for example on/off) of the handwriting -, speech -, eye movement - and/or pointing recognition. Furthermore there could be buttons for switching on/off the single recognition or generation applications 40 or choosing different operation modes.

The browser 31, shown in figure 2, comprises at least an area 301, called a HTML window, where HTML documents are displayed, an input filed 302 for enter an Uniform Resource ldentifier (URI) and an area 303 for enter data with a pen by handwriting, which is usually a touch sensitive area of a terminal display. Of course, the whole display may be realised as a touch sensitive screen, wherein a certain area is provided for the hand-written input and the touch sensitive function of the other areas might be used for selecting elements, for example buttons, fields, or URI links of an HTML document displayed in the HTML window 301, control elements of the browser like browser buttons or a browser menu, etc., by touch.

Furthermore the input filed 302 for URI and/or respective areas of the presently displayed HTML document, which contain elements provided for data input, e.g. input fields, might be realised as an area for hand-written input. The latter areas are dynamically determined by software in dependency from the presently displayed HTML document. In these areas data can be entered in hand-written and after performing the handwriting recognition the results are displayed in the same area.

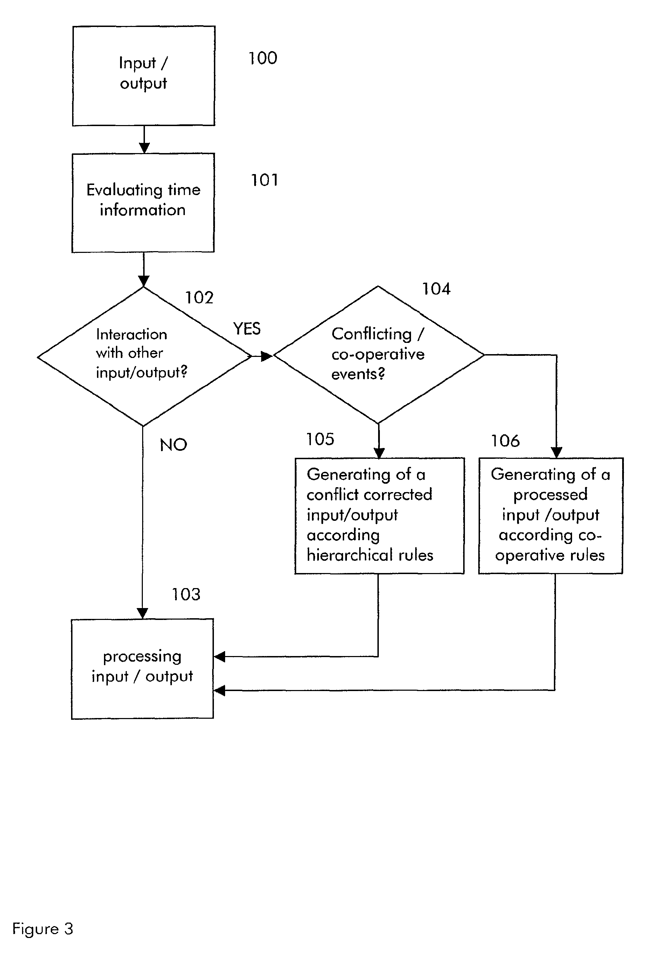

The browser preferably comprises button for controlling the browser. The browser shown figure 3 has a "backward" and "forward" button 304 and "go to" button 305 for calling the URI of the input field 302. It should be noted that the browser might have further control buttons or menus which are known from common browser like browser distributed under the trademark "Netscape" or "Internet Explorer". The browser according to then invention has optional buttons for switching on/off different operation modes or input devices, like a button 306 for switching on/off speech recognition and a button 307 for stopping text to speech (TTS) generation. All buttons might be also operable by speech , apart form the button for switching on the speech recognition. Furthermore, the browser might have areas for displaying the results of the different recognition results like an area 308 for speech recognition results and an area 309 for handwriting recognition results. Also, areas for displaying presently used libraries like an area 310 for the presently active grammar of the speech recognition, could be provided. Such areas for displaying recognition results or used libraries are in particular useful during development of a browser. Also an indication 311 for the input level of the microphone might be provided.

A multimodal browser according to the invention can be based on a standard HTML browser. By providing an interpretation of multimodal meta tags within the HTML page it becomes possible to drive further input and/or output units like the speech and the handwriting recognition and text to speech synthesiser for multimodal interaction. To strengthen the speech interface by allowing mixed initiative dialogs, the application provides syntax and at least simple semantic information, e.g. to fill several fields and then activate the submit button, which is also evaluated in the multimodal browser. In a preferred embodiment of the invention, the multimodal browser can be used as a fully speech driven interface, where the multimodal browser is partly overlaid with artificial human character, which allows a more natural conversational user interface.

Following the concept of the multimodal meta tags according to the invention is exemplary illustrated for HTML.

The idea of the multimodal meta tags is to combine the existing functionality of a common used mark-up language, e.g. HTML, and the possibility of controlling the different software (speech recognition, handwriting recognition, speech synthesis), that is used for multimodal interaction. To protect the simplicity of using web-services often forms are used in HTML to submit and present information.

The integration of the software is implemented by using so-called <meta>-tags in an HMTL-file. Especially concerning the speech driven dialogs, these tags are used e.g. to bind a grammar-file to a certain context, to define the focus to a form-element or even to output the synthesised speech. The meta-attribute "name" is identified as a keyword to set the required parameters.

For the purpose of introduction definitions of code examples of multimodal meta tags for using in HTML-files are described in brief:
<meta name="Context" content="user.bnf">

This definition causes, that the required grammar-file (here: user.bnf) is used by the speech recognition software in this context (HTML-file). So all defined words, phrases, figures, etc., defined in the bnf.file, i.e. the grammar file, are to be recognised by the speech recognition software.
*<name="FocusList" content="IdUser;IdCity;IdDate">*

Here, the focus is set to a certain input-tag or button in the HTML-form. The context at this point of the file (IdUser) is to be evaluated first.
<*meta name*="*IdVocabList*" *content*="*IdUser user.bnf'>*

To assign a grammar-file to a certain input-tag or button the above mentioned instruction has to be defined.
<meta name="TTStext" content="Welcome">

To define a common **T**ext-**T**o-**S**peech-synthesis that is outputted as soon as the HTML-page is loaded, this "TTStext"-definition is to be done. Not only a common but also a specific TTS-synthesis is possible. Using the following code segment, a certain output from the ITS-System at a chosen place within the <body>-tag could be done. This is an attribute, integrated in a certain input-tag or select-box:
*title="Please identify"*
As soon as this element receives the focus, the text in quotes is outputted by the TTS-System.

Know the concept of multimodal meta tags are described in more detail. In particular, HTML lets authors specify meta data. The <meta> element describes a property and assigns a value to it. The meaning of a property and the set of legal values for that property is used in multimodal meta tag concept for implementation of multimodal interaction and allows interaction with components such speech recognition, speech synthesis and handwriting recognition, eye movement recognition pointing recognition.

In general, each multimodal dialog element of an extended HTML document for controlling by the web browser must have an identificator. The identificator is defined by the attribute "id".

The author of HTML document extended by multimodal meta tag has in particular the opportunity to specify:
- default URL (see item 1.1.),
- default vocabulary, loaded with the first WEB page (see item 1.2.),
- a list of identificator names of dialog elements for focus control(see item 1.3.),
- an introduction text which will be spoken after the WEB page will be loaded (see item 1.4.),
- a key-value pair list of identificator names and corresponding vocabulary files. The vocabulary file will be loaded when the corresponding field get focus (see item 1.5.),
- a text to spoken via a synthesiser when the corresponding dialog element get focus (see item 1.6.),
- an action allowed setting focus on hyperlinks, buttons, input fields and dialog elements such combobox, checkbox and radiobutton by speech (see item 3.3.).

### 1. Generating a HTML page using multimodal meta tags

### 1.1. Specifying default URL:

At the start of a map application the default Web map page is shown to the user. Default URL is defined using the HTML tag <BASE> and its attribute *"href".*

### Example:

when default URL is *http:*//*localhost*/*test*/ the <BASE> tag is defined as
<BASE href="http://localhost/test/">

### 1.2. Define a default vocabulary for the speech recognition:

Default vocabulary for the speech recognition is defined using <meta> tag and its attributes *name* and *content.*

The attribute "name" must have the value "*Context*" and the attribute "content" contains file name having the extension ".bnf' which defines the default vocabulary.

How a ".bnf' file is build describes item 4.

Example: when default vocabulary is defined in mainpage.bnf file the corresponding <meta> tag is defined as
<meta name="Context" content="mainpage.bnf'>

### 1.3. Define a list for automatic conversation process:

All dialog elements of a WEB page can be navigated by speech. For this purpose a special <meta> tag with the attribute name set mandatory to "FocusList" is created.
The attribute content contains the list of all elements in sequence order, represented by their *Ids* and separated by semicolon. As mentioned before all controlled dialog elements must have an ld identificator.

Example: Two dialog elements are created: "Login" and "Password".
In our example the *Login* input field has *Id =IdLogin*, the next input field, the *Password* has the *Id*=*IdPwd*.
The definition of the corresponding <meta> tag supporting setting focus on dialog elements is define as:
<meta name="FocusList" content="IdLogin;IdPwd;">

### 1.4. Assign a welcome text for synthesised speech at the beginning of a page:

Sometimes is very useful at first to give the user some information or simply to welcome him.
Such welcome text can be defined using <meta> tag attributes name mandatory set to "TTStext". The text to be synthesised defines attribute content. This text will be spoken by theTTS module after the page is loaded.

Example: A welcome text "Wittkommen bei der Multimodal Demo von Alcatel" is defined as
<meta name="TTStext" content="Willkommen bei der Multimodal Demo von Alcatel.">

### 1.5. Assign BNF file to HTML element

An input field can be filled by speech. In this case the vocabulary for the speech recogniser must be defined. It can be the default vocabulary or the vocabulary for the corresponding field.

Vocabularies are defined with help of the <meta> tag attribute name set to "*IdvocabList".* The content attribute consists of a key-value pair list of identificator names and corresponding vocabulary files. The vocabulary files must have the extension .bnf.
The vocabulary file is loaded when the corresponding field get focus.

Example: A WEB page consists of two input fields which allow the user to choose a firm and a person in the firm to get an information about the person. The two fields have identifications *IdFirm* and IdName and the corresponding vocabulary files are called firm.bnf and *name.bnf.*
By the definition of corresponding <meta> tag the identificator and the.bnf file are separated by space, the key-value pairs are separated by semicolon
<meta name=" ldVocabList content = "IdFirm firm.bnf; ldName name.bnf">

### 1.6. Associate a text to be spoken to a HTML element

Setting focus to an input field can be accompanied with a spoken text. It is useful to give the user additionally information or to guide him.
For this purpose the attribute "title" is utilised. It consists of the text to be syntesised.

Example: To associate the text: "Bitte geben Sie den Namen ein, den Sie suchen wollen" with the input field Name attribute "*title*" is defined:
<input type="Text" Id="Name" name="Name" title="Bitte geben Sie den Namen ein, den Sie suchen wollen">

### 2. TTS Engine:

The Text to Speech module generates voice output.

Text generated as voice output can be defined as a introduction text or it can be associated with a dialog element.

The introduction text can not be interrupted.

The voice output generated by the TTS module and associated with a dialog element can be interrupted either by setting the focus on an other field or by clicking the "stop TTS" button.

### 3. Speech recognition.

How to create a BNF file containing isolated words.

Isolated word combining together build group of words thematically related.
To make lists of isolated words a vocabulary file having the bnf extension must be created.
That *bnf* file contains 3 reserved words: *grammar, language* and *export* beginning with exclamation mark ("!") mark and terminated with semicolon, as shown below
!grammar xxx;
!language xxx;
!export <symbols>;
where xxx is a placeholder.

The *grammar* keyword must be defined, but it is not evaluated. It can be any *xxx* name following the keyword *grammar.*

The *language* keyword must be the active language defined in the ASR engine.

The grammar and *language* keywords must be defined only once.

The export keyword is used to define words grouped thematically. It follows by a symbol defining latter in the bnf file. Symbols contain isolated words separated with "|".

There can be more than one !export keyword, and so, more than one symbol can be defined.

### Example:

!grammar "Company";
!language "Deutsch";
!export <company>;
<company>: Alcatel |France Telecom |KUN;

### 3.2. How to create a BNF file containing context independent words.

For control of dialog elements such links, buttons or input fields or for application commands a file with context independent words must be created.
How to build such file is described below.
*Symbols* in the bnf file for context independent recognition are placeholder for rules.
A rule is described by keyword *!action*, followed by the field identifier, a deliminator and the text to be spoken and recognised.
The rule is explained below in the Backus Naur Form ( BNF) notation deliminator :: = < | >
Keyword ::= <!action>
ld ::= <string>
Identifier ::= <Id> <deliminator>
Open_ldent :: = <(">
Close_Ident :: = <")>
Text_to_Reco ::= <string> | <string> <deliminator> <Text_to_Reco> Rule ::= < Keyword> <Open_ldent> <ldentifier> <Close_Ident> < Text_to_Reco>

### Example:

!export <conf>;
!export <Command>;
<conf>: !action("IdCheckboxl|")ia|nein;
<Command>: !action("IdOK|")Anfrage starten | !action("IdCancel|") Eingabenlöschen |action("IdFirm||")Firma| !action("|dName|")Name|!action( "IdName|")zurück|!action("|dOK|")weiter;

### 3.3. How to simulate a mouse-click on a HTML dialog element per speech

In order to simulate mouse_click events by speech
1) in the html file the dialog element which should be active (selected by simulated mouse-click) have to have an attribute *Id* and the attribute onclick set to "this.focus()"
2) for this dialog element an entry in .bnf file must be specified. The entry consists of the keyword action (see item 4.2.).
The both *lds* must be the same, in the HTML file and in the .bnf file.

### Example:

The HTML file defines an input dialog element called Firma on which the focus should be set
<input type="Text" name="Firma" size="20" maxlength="20" id="IdFirma" title="Bitte geben Sie die Firma ein, die Sie suchen wollen" onclick="this.focus();">

In the current active BNF file the *!action* keyword must be defined followed by the identificator of this input field and the keyword to be spoken for this field selection, for instance
!action("**IdFirma|**")Firma

When user speaks "Firma", he simulates a mouse-click on the input dialog element Firma (with the IdFirma). As result the focus will be set to this input field.

### 4. Handwriting:

For the handwriting recognition two files are used:
1) the *recognConfig.txt* describing configurations of the recognizer. Only one defined configuration can be active in a time.
2) the *vocabList.txt* defining which vocabularies are loaded when the recognizer is started.

### 4.1. Switching handwriting configuration:

The configuration described in the *recognConfig.txt* can be switch
1) via application's menu Optionen | Handschrift Configurationen |2 Digits or 3 Printed(Upp)
2) via Popup menu in handwriting window by clicking the right mouse button

Menu "*2 Digits*" means editing digits while menu "*3 Printed(Upp)*" means editing new words.

The concept of the multimodal extension, i.e. the multimodal meta tags makes it practical to interpret the specific tags of the document after it has been loaded. At this point all multimodal meta tags are considered, like the sequencing of the single dialog elements. Furthermore, an event handler is supervising, if a new dialog element has been selected, either by following the sequence or an interaction by pointing or speech. Then the multimodal interpretation of the dialog element takes place. Finally, events coming from the speech, handwriting eye moving and pointing recognisers are interpreted.

It has been considered, that there are different type of commands that could be given by the user:
- filling of fields or selecting items
- navigation within the page or the web application, like selecting items or following links
- controlling of the browser ("previous page")

Since the first two are depending on the application, grammar and the semantic interpretation of speech and handwriting input has to be provided by the application developer. A reference to the grammar is integrated in the multimodal tags. For the semantic parsing of the result coming from the recognisers, the information is stored either in the grammars itself (e.g. by ECMA tags) or implemented as separated documents which include an attribute-value list and a rule set. A dialog manager either in the client or on the server could handle the input and branches corresponding to the users desired action.

Among a plurality of user inputs and in particular by inputs of different modalities or from different input devices, some or even all inputs could be related to each other. For example, the user might select a field by speech and fill the field via handwriting or keyboard. In an advantageous manner the user has not to move his hand from keyboard to mouse and back as by using mouse and keyboard for inputs. The multimodal browser provides the possibility to distribute different input activities like selecting or filling a field, scrolling a window or selecting a button, to different human input modalities using hand, speech or eye movement, wherein disadvantageous accumulation to only one modality can be avoided. For example, a selecting of an element by eye moving recognition or pointing recognition provides, in particular in combination with filling a field by speech, a very user-friendly handling. The eye movement recognition may cause an unwanted control or input regarding to the browser while a user only intends to read a page. Therefore this option should be switchable on and off by command, preferable by a speech command. Of course, it is still possible to control the browse via one human input modality, e.g. by hand as usual via keyboard (and mouse) or only by speech via speech recognition.

Figure 3 shows a flowchart of processing inputs event which are related to each other. In a first step 100 an user input or an output takes place. In the next step 101 time information with regards to the input is evaluated. This comprises the determining of the trigger time of the input. Furthermore a time period is assigned to an input event. The time period could be the same for all inputs or all inputs of the same modalities (e.g. speech, keyboard, handwriting or eye movement) or the same kind (e.g. selecting an element by mouse, speech, eye movement or filling a filed by keyboard, speech or handwriting) or could be different for different input modalities and/or different kind of inputs. An input event within a time period of a other input are considered as belonging to each other. In step 102 the interaction of an input with a further input is checked, i.e. if it is within the time period. Usually it will be checked if a second input is within the time period of a first input. Of course, it could be also possible to make a check backward in time, determining if a first input is within the time period of a second input, wherein the time period of input is backward directed. This is basically equivalent to a forward directed time period of an input, wherein the time period is variable and its size is determined from further subsequent input.

If there is no interaction with a further input, the processing of the input, i.e. the output of the consequence of the input as filling a field, scrolling a window or selecting a element takes place in step 103 as usual. If there is an interacting with a further input, then in step 104 it is checked if the inputs are in a co-operative relation or a conflict relation to each other.

Inputs being in a conflicting relation to each other are processed in step 105. The solving of the conflict is based on hierarchical rules describing in general which input have a higher priority against others. The rules may comprises general rules describing that an input of a particular modality or from a particular input device like has a higher priority, for example speech input may be overruled by an input via the keyboard , mouse or pen. Also, certain kinds of inputs may have higher priority as other kind of inputs, for example inputs regarding the filling of a field may have higher priority as inputs for navigating or controlling the browser. The rules may also determining the handling of inputs for particular situation where certain individual inputs collide with each other. In addition, this rules may determine an input priority and ranking respectively for different operation mode of a web browser according to the invention. For example, in a speech controlled operation mode, a speech input has a higher priority as an input by keyboard or mouse.

The resolving of the conflict comprises in general the blocking of the input with the lower priority. This may be accompanied by a message to the user. Thus a conflict corrected input is generated which will processed or executed in step 103. In some cases, the generation of a conflict corrected input may merely comprise the cancelling of an input with lower priority or lower ranking.

Inputs being in a co-operating relation to each other are processed in step 106. The handling and processing respectively of co-operating inputs is based on co-operating rules describing in general how such inputs are linked, combined, adapted and/or in which sequence the inputs have to be handled.

The rules may comprises general rules describing an interaction of kinds of inputs of the same or different modalities or from the same or different input devices like a speech input and an input via the keyboard, mouse or pen, wherein for example a field is selected via mouse or pen and the field is filled via speech input or keyboard. Of course, both action could still be done over the same input modality, for example selecting and filling a filed by speech input or using a pen together with a handwriting recognition.

Also, the general handling /processing of different kinds of related inputs (selecting, filling etc. ) from the same inputs device or the same kind of related inputs from different devices may determined by the co-operative rules. The rules may also determining the handling of inputs for a particular situation where certain individual inputs are related to each other. In addition, this rules may determined a handling/processing of related inputs, i.e. inputs considered as belonging to each other, for different operation mode of a web browser according to the invention. For example, in a speech controlled operation mode, a speech input may be more relevant as an input by keyboard or mouse and/or the latter inputs may considered as supplementary information for the speech input.

The generation of a combining input comprises a linking or combining of related inputs, an adapting of inputs and/or an ordering in which sequence the inputs have to be handled. Thus, the combined input could comprise an input extracted from the related inputs an/or a sequence of related inputs in an appropriate order.

Previous, the handling of inputs related to each other and appropriate rules are described based on figure 3. However, as indicated by the term "input/output" in figure 3, the foregoing concept of handling and rules can also be applied to outputs related to each other and/or outputs and inputs related to each other by using correspondent hierarchical rules and/or co-operative rules.

Following a further embodiment of the invention with a distributed architecture of the input/output processing module and applications, respectively will be described. Turning back to figure 1, the input/output interface 50 is responsible for controlling the input and output streams to the different I/O devices 61 - 67. Wherever the streams need a special conversion, application interfaces 41a - 44a to the input/output processing applications 41 - 44, which are in particular media conversion modules like TTS, speech recognition etc., are implemented. This allows beside the direct interpretation on the client device also a distributed architecture, i.e. a distribution of the capturing unit and the conversion unit, which could be implemented on a server. We will explain the distributed approach on the following paragraph.

Processing of multimodal elements needs a lot of computing power if high recognition rates are mandatory. Mobile terminals or PDAs often don't have the necessary calculation power to do the processing. Transmission of the signal to a server has the disadvantage that the signal is bandwidth limited and also coded. Both reduces the recognition rate and limits the vocabulary size. In particular, data input or controlling the browser by speech with natural language understanding needs a large vocabulary and high recognition rate.

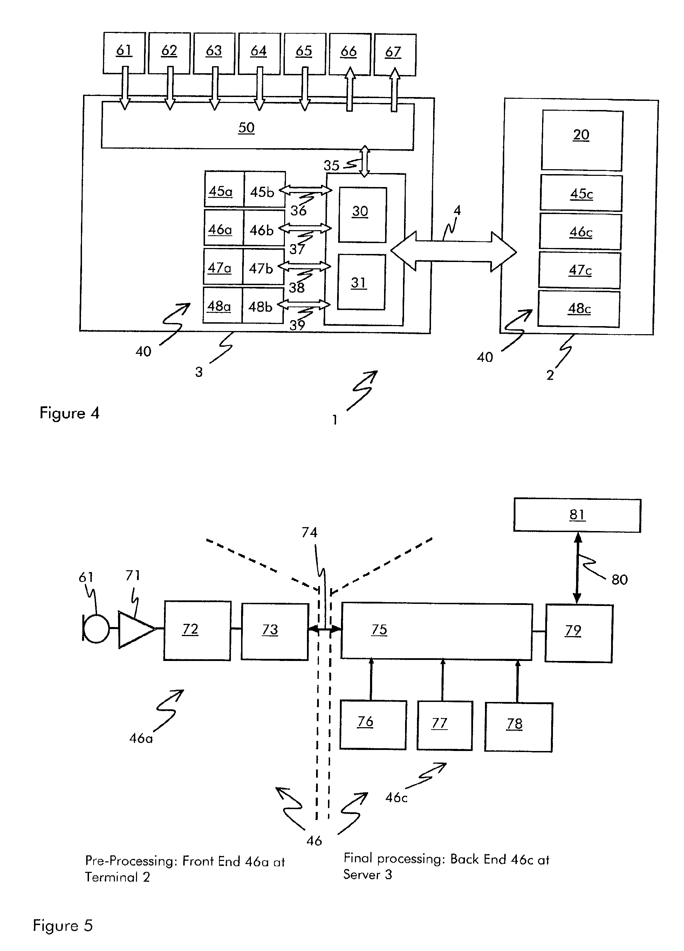

Therefore, a client/server system with a distributed architecture is being realised. In figure 4, the general architecture of distributed recognisers in a client/server system is shown, wherein with reference to figure 1 equal reference number denotes equal components. The input / output processing modules or applications 40 of figure 1 are distributed among the client terminal 3 and server 2. At the terminal 3 at least a capturing part or application of the corresponding input / output processing applications, in detail a front-end 45a of a handwriting recognition, a front-end 46a of a speech recognition, and a front-end 47a of eye movement recognition is provided for receiving the input data form respective input devices 61 - 65. The front-ends 45a - 47a preferable comprises application interfaces 45b - 47b. The data are transmitted from the front-ends 45a - 47a to processing parts or applications of the respective input / output processing applications. In figure 4 processing parts 45c - 47c, also called back-ends, for handwriting recognition, speech recognition, and eye movement recognition, where the main and final processing of the data takes place, are shown. Optional a pre-processing of the input data is performed at the capturing part or application in order to obtain a reduced volume of data for transmitting to the server. Regarding the Text to Speech generation, a front-end 48 c of the TTS might also provided at the server 2, where speech data transmitted from a processing part or application 48 a are final processed in the client terminal. Again, the main processing is performed by the processing part 48 c at the server 2. The communication or a part of the communication between terminal 3 and server 2, in particular the evaluation or extracting of input data for latter analysing and processing might be realised with CGI scripts. Also, a dedicated communication protocol between the front-end (client) and back-end (server), which could be considered as an extended HTTP could be used. The transfer comprises an extended set of commands which are adapted and associated to the multimodal meta tags according to the invention.

Preferable, the system with a distributed architecture provides several independent servers such as a handwriting recognition server, a text-to-speech server and a speech recognition server. Handwriting recognition could be implemented a client or client/ server architecture and is used for command inputs is very helpful for the form-filling (address, locations, notice, etc.). The speech recognition and the synthesis is a client or client/server implementation dependent on the architecture and the performance of the client.

Figure 5 shows in more detail an distributed architecture exemplary on the basis of a speech recognition 46. At the client side speech is inputted via a microphone 61 and the speech data are subjected under an amplifier 71. The front-end 46a comprises a noise reduction function 72 and a feature extraction function 73. The input is pre-processed at the terminal 3 for generating a reduced feature set, and the reduced feature set is transmitted over network connections 74 like ISDN, GSM or lP ( Internet Protocol) to the server 2, where the feature set is finally processed of the back-end 46c on the server 2. The back-end comprises a speaker independent speech recognition 75 using a phoneme reference 76, a word model 77 and a grammar 78. The recognition results 79 are provided for use with other applications 81 via a connection 80. The application 81 in Figure 5 is shown at the site of server 2. That does not means, that the application must be a part of the server 2. Of course, the application 81 could be located at another terminal or server or the terminal 2 (which is not shown in figure 5) and the connection 80 could be network connection like ISDN, GSM or IP ( Internet Protocol). The application 80, for example, could be the browser application 31. In this case, the network connection 74 and the connection 80 is preferably a single connection (not shown in figure 5), used for both.

The multimodal extension of a mark-up language, in particular for web-based services, provides very useful advantages for mobile terminals and services. Especially in this environments, an interface as the browser according to the invention, that offers the user the possibility to change the way he want to input, might help to overcome the obstacles currently suffering in mobile internet services. Furthermore an approach has to be chosen, that allows application developers to reuse the technologies they already know for a fast deployment of such services.

## Claims

1. Method for multimodal interaction between an user and a terminal (3) comprising an input unit (61, 62, 63, 64), an output unit (66, 67) and a browser application (31), which is capable of interpreting a mark-up language, wherein the interaction takes place over the input unit (61, 62, 63, 64), and/or the output unit (66, 67) and by using the browser application (31) and the mark-up language,
and wherein, the mark-up language comprises an extension of multimodal meta tags for multimodal interactions,
and wherein the method comprises the steps of:
interpreting multimodal meta tags from the mark-up language for controlling the multimodal interactions and
processing data of the multimodal interaction with respect to the multimodal meta tags by using at least one input and/or output processing application (40).

2. Method according to claim 1, **characterised in that**, the browser application (31) is controlled corresponding to said multimodal meta tags and/or a communication (36 - 39) between the browser application (31) and the input and/or output processing applications (40) is controlled corresponding to said multimodal meta tags.

3. Method according to claim 1 or 2 , **characterised in that**, said at least one input and/or output processing application (40) is one of the following applications:
- handwriting recognition application (41, 41a, 45a - c)
- speech recognition application (42, 42a, 46a - c)
- eye movement recognition application (43, 43a, 47a - c)
- speech generation application (44, 44a, 48a - c).
- pointing recognition application.

4. Method according to one of the claims 1 to 3, **characterised in that**, said input and/or output processing application (40, 41 - 44) is provided at the terminal (3).

5. Method according to one of the claims 1 to 4, **characterised in that**, said input and/or output processing application (40) is realised as an application having a distributed architecture (45 a, 45 b, 45 c - 48 a, 48 b, 48 c).

6. Method according to one of the claims 1 to 5, **characterised by** rules determining the handling of a plurality of multimodal interactions (input and/or outputs) being related to each other.

7. Terminal for multimodal interaction between an user and said terminal (3) comprising an input unit (61, 62, 63, 64), an output unit (66, 67) and a browser application (31), which is capable of interpreting a mark-up language, wherein the interaction takes place over the input unit (61, 62, 63, 64), and/or the output unit (66, 67) and by using the browser application (31) and the mark-up language, and wherein, said used mark-up language comprises an extension of multimodal meta tags for multimodal interactions,
said multimodal meta tags from the mark-up language are interpreted at the terminal for controlling the multimodal interactions and said terminal comprises at least one input and/or output processing application (40) for processing data of the multimodal interaction with respect to the multimodal meta tags.

8. Terminal according to claim 7, **characterised in that**, means are provided for determining and evaluating time information of said multimodal interaction.

9. Browser application used for multimodal interaction between an user and a terminal (3) comprising an input unit (61, 62, 63, 64), an output unit (66, 67), at least one input and/or output processing application (40) for processing data of the multimodal interaction, and said browser application (13),
wherein the multimodal interaction takes place over the input unit (61, 62, 63, 64), and/or the output unit (66, 67) and by using said browser application (31) and a mark-up language comprising an extension of multimodal meta tags for multimodal interactions, and wherein said browser application (31 ) interprets the mark-up language with said multimodal meta tags,
said browser application (31) is controlled corresponding to said multimodal meta tags and/or a communication (36 - 39) between the browser application (31) and the input and/or output processing applications (40) is controlled corresponding to said multimodal meta tags.

10. Mark-up language, in particular used for representing of information of a mark-up language document in connection with a browser application (31), wherein the mark-up language comprises meta tags specifying properties and values of said properties of the mark-up language document, and wherein said mark-up languages further comprises multimodal meta tags for controlling the multimodal interactions and processing data of the multimodal interaction with respect to the multimodal meta tags by using at least one input and/or output processing application (40).
